# EUROPÄISCHE PATENTSCHRIFT

(11) **EP 4 226 059 B1**
(45) Veröffentlichungstag und Bekanntmachung des Hinweises auf die Patenterteilung: **21.08.2024**
(21) Anmeldenummer: 21777710.1
(22) Anmeldetag: 15.09.2021
(51) Int. Cl.: F16C 33/14, B23P 15/00, F16C 33/10

(54) **UNRUNDES GLEITLAGER**
NON CIRCULAR SLIDING BEARING
PALIER GLISSANT NON CIRCULAIRE

(30) Priorität: 06.10.2020 DE 102020212572
(43) Veröffentlichungstag der Anmeldung: 16.08.2023
(73) Patentinhaber: ZF Friedrichshafen AG, 88046 Friedrichshafen (DE); ZF Wind Power Antwerpen NV, 3920 Lommel (BE)
(72) Erfinder: OOMS, Maarten, 2440 Geel (BE); KRIECKEMANS, Koen, 2200 Noorderwijk (BE); GOOVAERTS, Michel, 2235 Hulshout (BE); WITTER, Dennis, 88046 Friedrichshafen (DE)
(74) Vertreter: ZF Friedrichshafen AG
(86) Internationale Anmeldenummer: PCT/EP2021/075262
(87) Internationale Veröffentlichungsnummer: WO 2022/073730

(56) Entgegenhaltungen:
- DE-A1- 1 677 166
- DE-A1- 102006 033 397
- DE-A1- 3 936 069
- US-A1- 2013 053 202

## Beschreibung

Die Erfindung betrifft eine Gleitfläche nach dem Oberbegriff von Anspruch 1 und ein Verfahren nach Anspruch 7. Zugrunde liegt die Aufgabe, die Haltbarkeit und Belastbarkeit eines Gleitlagers zu verbessern.

Bei der erfindungsgemäßen Gleitfläche handelt es sich um eine innere Gleitfläche für ein Radialgleitlager. Ein Radialgleitlager ist ein Gleitlager, das neben der inneren Gleitfläche eine äußere Gleitfläche aufweist, wie z.B. in DE 39 36 069 A1 offenbart.

Die beiden Gleitflächen sind so angeordnet, dass sie in der Lage sind, Kräfte in radialer Richtung, das heißt orthogonal zu einer Drehachse des Radialgleitlagers, zu übertragen. Die Übertragung der Kräfte erfolgt dabei jeweils zwischen der inneren Gleitfläche und der äußeren Gleitfläche.

Bei einem reinen Radialgleitlager ist keine Übertragung von Kräften in axialer Richtung möglich. Handelt es sich um ein kombiniertes Radial-Axialgleitlager können auch Kräfte in axialer Richtung, das heißt in Richtung der Drehachse, übertragen werden.

Die innere Gleitfläche und die äußere Gleitfläche sind um die oben genannte Drehachse relativ zueinander verdrehbar. Sie bilden ein Gleitflächenpaar. Ein Gleitflächenpaar zeichnet sich dadurch aus, dass dessen Gleitflächen einen Lagerspalt bilden. Dieser ist trocken oder mindestens teilweise mit einem Schmierstoff gefüllt.

Die äußere Gleitfläche umschließt die innere Gleitfläche. Mindestens ein, bevorzugt jedes Lot ausgehend von der äußeren Gleitfläche auf die Drehachse schneidet die innere Gleitfläche. Jeder Abstand eines beliebigen Punkts der äußeren Gleitfläche ist zudem größer als jeder Abstand eines Punkts der inneren Gleitfläche von der Drehachse.

In mindestens einem Querschnitt bildet die äußere Gleitfläche eine in sich geschlossene Kurve, die eine Fläche umschließt. Teil dieser Fläche ist eine von der inneren Gleitfläche in diesem Querschnitt gebildete, ebenfalls in sich geschlossene Kurve.

Der mindestens eine Querschnitt zeichnet sich durch einen radialen Verlauf aus. Die entsprechende Schnittebene verläuft also orthogonal zu der Drehachse des Radialgleitlagers.

In dem mindestens einen Querschnitt, bevorzugt in jedem Querschnitt, besteht die innere Gleitfläche bzw. die durch die innere Gleitfläche gebildete Kurve aus vier Kreisbögen. Die innere Gleitfläche besteht also aus einem ersten Kreisbogen, einem zweiten Kreisbogen, einem dritten Kreisbogen und einem vierten Kreisbogen. Die Kreisbögen grenzen aneinander an. Im Einzelnen grenzt der erste Kreisbogen an den dritten Kreisbogen und den vierten Kreisbogen an. Der dritte Kreisbogen grenzt an den ersten Kreisbogen und den zweiten Kreisbogen an, der zweite Kreisbogen an den dritten Kreisbogen und den vierten Kreisbogen. Der vierte Kreisbogen schließlich grenzt an den ersten Kreisbogen und den zweiten Kreisbogen an. Der erste Kreisbogen und der dritte Kreisbogen weisen somit einen gemeinsamen Eckpunkt auf. Ebenso weisen der dritte Kreisbogen und der zweite Kreisbogen, der zweite Kreisbogen und der vierte Kreisbogen sowie der vierte Kreisbogen jeweils gemeinsame Eckpunkte auf.

Der erste Kreisbogen und der zweite Kreisbogen liegen vollständig auf unterschiedlichen Seiten einer Längsschnittebene. Die Längsschnittebene zeichnet sich durch einen axialen Verlauf aus. Sie verläuft also parallel zu der Drehachse des Radialgleitlagers. Vorzugsweise verläuft die Längsschnittebene durch die Drehachse, sodass die Drehachse vollständig in der Längsschnittebene enthalten ist.

Die Längsschnittebene schneidet den dritten Kreisbogen und den vierten Kreisbogen sowie einen Punkt, der einen Mittelpunkt des dritten Kreisbogens und einen Mittelpunkt des vierten Kreisbogens bildet.

Der Mittelpunkt eines Kreisbogens bezeichnet den Mittelpunkt des zugehörigen Kreises, das heißt desjenigen Kreises, von dem der Kreisbogen einen Ausschnitt bildet. Die Eckpunkte des Kreisbogens sind dabei diejenigen Punkte des Kreises, die durch den Kreisbogen miteinander verbunden werden und den Kreisbogen nach außen hin begrenzen. Die Eckpunkte zeichnen sich dadurch aus, dass nicht beidseitig, sondern nur einseitig des jeweiligen Eckpunktes weitere Punkte des Kreisbogens liegen.

Erfindungsgemäß liegen der erste Kreisbogen und sein Mittelpunkt vollständig auf unterschiedlichen Seiten der Längsschnittebene. Ebenso liegen der zweite Kreisbogen und sein Mittelpunkt vollständig auf unterschiedlichen Seiten der Längsschnittebene. Dies impliziert, dass der Mittelpunkt des ersten Kreisbogens und der zweite Kreisbogen auf derselben Seite der Längsschnittebene liegen, und dass analog der Mittelpunkt des zweiten Kreisbogens und der erste Kreisbogen auf derselben Seite der Längsschnittebene liegen.

Durch die erfindungsgemäße Ausgestaltung der Kreisbögen ergibt sich eine unrunde Form der inneren Gleitfläche. Dies verbessert die Belastbarkeit und die Haltbarkeit des Radialgleitlagers.

In einer bevorzugten Weiterbildung sind der Mittelpunkt des ersten Kreisbogens und der Mittelpunkt des zweiten Kreisbogens zueinander spiegelsymmetrisch. Eine Spiegelebene wird dabei durch die oben genannte Längsschnittebene. Vorzugsweise ist darüber hinaus auch der gesamte Querschnitt der inneren Gleitfläche, das heißt, die in der Querschnittebene liegende Kurve der inneren Gleitfläche, zu derselben Längsschnittebene spiegelsymmetrisch. Darüber hinaus bevorzugt wird eine Anordnung der drei Mittelpunkte, das heißt des Mittelpunkts des ersten Kreisbogens, des Mittelpunkts des zweiten Kreisbogens und des gemeinsamen Mittelpunkts des dritten und vierten Kreisbogens auf einer Geraden, die alle drei Mittelpunkte schneidet.

Ein Radius des ersten Kreisbogens bzw. des zugehörigen Kreises ist in einer darüber hinaus bevorzugten Weiterbildung größer als ein Radius des dritten Kreisbogens bzw. des zugehörigen Kreises und als ein Radius des vierten Kreisbogens bzw. des zugehörigen Kreises. Bevorzugt ist darüber hinaus auch ein Radius des zweiten Kreisbogens bzw. des zugehörigen Kreises größer als der Radius des dritten Kreisbogens und als der Radius des vierten Kreisbogens. Der Radius des dritten Kreisbogens und der Radius des zweiten Kreisbogens sind dabei bevorzugt gleich. Ebenso gleicht der Radius des dritten Kreisbogens bevorzugt dem Radius des vierten Kreisbogens.

Die Gleitfläche ist bevorzugt weitergebildet als innere Gleitfläche eines Radialgleitlagers. Dieses weist eine äußere Gleitfläche auf, die mit der inneren Gleitfläche ein Gleitflächenpaar bildet.

Das Radialgleitlager ist bevorzugt als Teil einer Planetenstufe weitergebildet. Eine Planetenstufe umfasst ein Hohlrad, ein Sonnenrad, einen Planetenträger und mindestens ein Planetenrad. Dieses ist drehbar auf einem Planetenbolzen gelagert, der in dem Planetenträger fixiert ist. Das mindestens eine Planetenrad kämmt mit dem Sonnenrad und/oder dem Hohlrad. Vorliegend ist das Planetenrad mittels des Radialgleitlagers auf dem Planetenbolzen gelagert. Dies ist besonders vorteilhaft, da die belastete Zone in dem Lager eines Planetenrads relativ zu dem Planetenträger statisch ist. Ebenso ist die Lage der inneren Gleitfläche des Radialgleitlagers bezüglich des Planetenträgers statisch. Damit ist auch die Form der inneren Gleitfläche relativ zu der belasteten Zone statisch. Durch eine geeignete Ausrichtung der inneren Gleitfläche bezüglich der belasteten Zone lässt sich ein verbessertes Lasttragvermögen erzielen.

In einer bevorzugten Weiterbildung bildet der Planetenbolzen die innere Gleitfläche des Radialgleitlagers einstückig aus. Alternativ kann der Planetenbolzen eine Buchse aufweisen, welche die innere Gleitfläche einstückig ausbildet. In dem Fall besteht der Planetenbolzen aus der Buchse und einem Grundkörper, auf dem die Buchse fixiert ist. Bei der Buchse und dem Grundkörper handelt es sich um physisch voneinander getrennte Stücke. Die äußere Gleitfläche des Radialgleitlagers wird bevorzugt jeweils einstückig durch eine Schwimmbuchse oder das Planetenrad ausgebildet.

Die erfindungsgemäße innere Gleitfläche lässt sich mittels einer Drehmaschine fertigen. Dabei kommt ein dreischrittiges Verfahren zum Einsatz, bei dem ein Werkstück zweimal umgespannt wird. Das Werkstück rotiert dabei um drei verschiedene Achsen. Ein entsprechendes erfindungsgemäßes Verfahren umfasst die folgenden Schritte:
- Drehen des Werkstücks, wobei das Werkstück um eine Achse rotiert, die durch den Mittelpunkt des ersten Kreisbogens verläuft. Dabei wird ein Abschnitt der inneren Gleitfläche gefertigt, der den ersten Kreisbogen enthält.
- Drehen des Werkstücks, wobei das Werkstück um eine Achse rotiert, die durch den Mittelpunkt des zweiten Kreisbogens verläuft. Ein Abschnitt der Gleitfläche, der den zweiten Kreisbogen enthält, wird in diesem Schritt gefertigt.
- Drehen des Werkstücks, wobei das Werkstück um eine Achse rotiert, die durch den gemeinsamen Mittelpunkt des dritten Kreisbogens und des vierten Kreisbogens verläuft. Dadurch werden zwei Abschnitte der inneren Gleitfläche gefertigt - ein Abschnitt, der den dritten Kreisbogen enthält und ein Abschnitt, der den vierten Kreisbogen enthält.

Der Schritt des Drehens des Werkstücks um die Achse, die durch den gemeinsamen Mittelpunkt des dritten Kreisbogens und des vierten Kreisbogens verläuft, wird vorzugsweise ausgeführt nach dem Schritt des Drehens des Werkstücks um die Achse, die durch den Mittelpunkt des ersten Kreisbogens verläuft und dem Schritt des Drehens des Werkstücks um die Achse, die durch den Mittelpunkt des zweiten Kreisbogens verläuft.

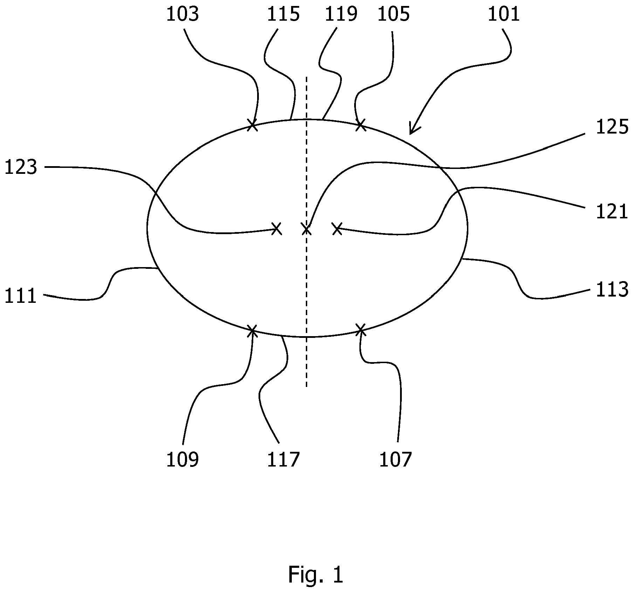

Ein bevorzugtes Ausführungsbeispiel der Erfindung ist in Fig. 1 dargestellt. Im Einzelnen zeigt:
- Fig. 1: eine innere Gleitfläche.
- Fig. 1: eine Schnittdarstellung einer inneren Gleitfläche.

Die in Fig. 1 dargestellte Gleitfläche 101 weist vier Eckpunkte von Kreisbögen auf - einen ersten Eckpunkt 103, einen zweiten Eckpunkt 105, einen dritten Eckpunkt 107 und einen vierten Eckpunkt 109. Die Gleitfläche 101 wird in der Schnittdarstellung durch einen ersten Kreisbogen 111, einen zweiten Kreisbogen 113, einen dritten Kreisbogen 115 und einen vierten Kreisbogen 117 gebildet. Bei dem ersten Eckpunkt 103 und dem vierten Eckpunkt 109 handelt es sich um Eckpunkte des ersten Kreisbogens 111. Die Eckpunkte des zweiten Kreisbogens 113 liegen in Gestalt des zweiten Eckpunkts 105 und des dritten Eckpunkts 107 vor. Der erste Eckpunkt 103 und der zweite Eckpunkt 105 sind Eckpunkte des dritten Kreisbogens 115. Bei dem dritten Eckpunkt 107 und dem vierten Eckpunkt 109 handelt es sich um Eckpunkte des vierten Kreisbogens 117. Somit stoßen der ersten Kreisbogen 111 und der dritte Kreisbogen 115 in dem ersten Eckpunkt 103 aufeinander. Der dritte Kreisbogen 117 und der zweite Kreisbogen 113 stoßen in dem zweiten Eckpunkt 105 aufeinander. In dem dritten Eckpunkt 107 stoßen der zweite Kreisbogen 113 und der vierte Kreisbogen 117 aufeinander. Der vierte Kreisbogen 117 und der erste Kreisbogen 111 stoßen in dem vierten Eckpunkt 119 aufeinander.

Die Gleitfläche 101 ist zu einer Längsschnittebene 119 spiegelsymmetrisch. Die Längsschnittebene 119 verläuft orthogonal zu einer Querschnittebene, die der Darstellungsebene der Fig. 1 entspricht.

Der erste Kreisbogen 111 und ein Mittelpunkt 121 des ersten Kreisbogens 111 befinden sich auf unterschiedlichen Seiten der Längsschnittebene 115. Weiterhin befinden sich ein Mittelpunkt 123 des zweiten Kreisbogens 113 und der zweite Kreisbogen 113 auf unterschiedlichen Seiten der Längsschnittebene 119. Zwischen den beiden Mittelpunkten 121, 123 liegt ein gemeinsamer Mittelpunkt 125 des dritten Kreisbogens 115 und des vierten Kreisbogens 117. Der gemeinsame Mittelpunkt 125 wird von der Längsschnittebene 119 geschnitten. Alle drei Mittelpunkte 121, 123, 125 liegen zudem auf einer Geraden, die in der obengenannten Querschnittsebene verläuft und orthogonal zu der Längsschnittebene 119 ausgerichtet ist. Durch den gemeinsamen Mittelpunkt 125 verläuft zudem eine Drehachse eines Radialgleitlagers, dessen innere Gleitfläche die Gleitfläche 101 bildet.

### Bezugszeichen

- 101: Gleitfläche
- 103: erster Eckpunkt
- 105: zweiter Eckpunkt
- 107: dritter Eckpunkt
- 109: vierter Eckpunkt
- 111: erster Kreisbogen
- 113: zweiter Kreisbogen
- 115: dritter Kreisbogen
- 117: vierter Kreisbogen
- 119: Längsschnittebene
- 121: Mittelpunkt des ersten Kreisbogens
- 123: Mittelpunkt des zweiten Kreisbogens
- 125: Mittelpunkt des dritten Kreisbogens und des vierten Kreisbogens

## Patentansprüche

1. Innere Gleitfläche (101) für ein Radialgleitlager, die in mindestens einem Querschnitt aus vier Kreisbögen (111, 113, 115, 117) besteht; wobei
ein erster Kreisbogen (111) und ein zweiter Kreisbogen (113) auf unterschiedlichen Seiten einer Längsschnittebene liegen, die einen dritten Kreisbogen (115), einen vierten Kreisbogen (117) und einen gemeinsamen Mittelpunkt (125) des dritten Kreisbogens (115) und des vierten Kreisbogens (117) schneidet; **dadurch gekennzeichnet, dass**
der erste Kreisbogen (111) und ein Mittelpunkt (121) des ersten Kreisbogens (111) auf unterschiedlichen Seiten der Längsschnittebene (119) liegen; wobei
der zweite Kreisbogen (113) und ein Mittelpunkt (123) des zweiten Kreisbogens (113) auf unterschiedlichen Seiten der Längsschnittebene (119) liegen.

2. Innere Gleitfläche (101) nach Anspruch 1; **dadurch gekennzeichnet, dass**
der Mittelpunkt (121) des ersten Kreisbogens (111) und der Mittelpunkt (123) des zweiten Kreisbogens (113) bezüglich der Längsschnittebene (119) zueinander spiegelsymmetrisch sind.

3. Innere Gleitfläche (101) nach einem der vorhergehenden Ansprüche; **dadurch gekennzeichnet, dass**
ein Radius des ersten Kreisbogens (111) größer ist als ein Radius des dritten Kreisbogens ()115 und ein Radius des vierten Kreisbogens (117).

4. Radialgleitlager, **gekennzeichnet durch**
eine innere Gleitfläche (101) nach einem der vorhergehenden Ansprüche und eine zylindrische äußere Gleitfläche; wobei
die innere Gleitfläche (101) und die äußere Gleitfläche ein Gleitflächenpaar bilden.

5. Planetenstufe mit mindestens einem Planetenrad und mindestens einem Planetenbolzen; **gekennzeichnet durch**
mindestens ein Radialgleitlager nach dem vorhergehenden Anspruch; wobei das Planetenrad mittels des Radialgleitlagers auf dem Planetenbolzen gelagert ist.

6. Planetenstufe nach dem vorhergehenden Anspruch; **dadurch gekennzeichnet, dass**
der Planetenbolzen die innere Gleitfläche (101) des Radialgleitlagers einstückig ausbildet.

7. Verfahren zur Herstellung eines Bauteils mit einer inneren Gleitfläche (101) nach einem der Ansprüche 1 bis 3; mit den Schritten
- Drehen eines Werkstücks, wobei das Werkstück um eine Achse rotiert, die durch den Mittelpunkt (121) des ersten Kreisbogens (111) verläuft;
- Drehen des Werkstücks, wobei das Werkstück um eine Achse rotiert, die durch den Mittelpunkt (123) des zweiten Kreisbogens (113) verläuft; und
- Drehen des Werkstücks, wobei das Werkstück um eine Achse rotiert, die durch den Mittelpunkt (125) des dritten Kreisbogens (115) und des vierten Kreisbogens (117) verläuft.

## Claims

1. Inner sliding surface (101) for a radial plain bearing, which surface comprises four circle arcs (111, 113, 115, 117) in at least one cross section; wherein a first arc (111) and a second arc (113) lie on different sides of a longitudinal sectional plane which intersects a third arc (115), a fourth arc (117) and a common center point (125) of the third arc (115) and of the fourth arc (117); **characterized in that** the first arc (111) and a center point (121) of the first arc (111) lie on different sides of the longitudinal sectional plane (119); wherein the second arc (113) and a center point (123) of the second arc (113) lie on different sides of the longitudinal sectional plane (119).

2. Inner sliding surface (101) according to Claim 1, **characterized in that** the center point (121) of the first arc (111) and the center point (123) of the second arc (113) are mirror-symmetrical to one another with respect to the longitudinal sectional plane (119).

3. Inner sliding surface (101) according to either of the preceding claims, **characterized in that** a radius of the first arc (111) is greater than a radius of the third arc (115) and a radius of the fourth arc (117).

4. Radial plain bearing, **characterized by** an inner sliding surface (101) according to any of the preceding claims, and a cylindrical outer sliding surface; wherein the inner sliding surface (101) and the outer sliding surface form a sliding surface pair.

5. Planetary gear stage with at least one planet wheel and at least one planet pin, **characterized by** at least one radial plain bearing according to the preceding claim; wherein the planet wheel is mounted on the planet pin by means of the radial plain bearing.

6. Planetary gear stage according to the preceding claim, **characterized in that** the planet pin integrally forms the inner sliding surface (101) of the radial plain bearing.

7. Method for manufacturing a component with an inner sliding surface (101) according to any of Claims 1 to 3; with the steps:
- turning of a workpiece, wherein the workpiece rotates about an axis which runs through the center point (121) of the first arc (111);
- turning of the workpiece, wherein the workpiece rotates about an axis which runs through the center point (123) of the second arc (113); and
- turning of the workpiece, wherein the workpiece rotates about an axis which runs through the center point (125) of the third arc (115) and of the fourth arc (117).

## Revendications

1. Surface de glissement intérieure (101) pour un palier lisse radial, constituée de quatre arcs de cercle (111, 113, 115, 117) dans au moins une section transversale ;
un premier arc de cercle (111) et un deuxième arc de cercle (113) étant situés sur des côtés différents d'un plan de section longitudinale qui coupe un troisième arc de cercle (115), un quatrième arc de cercle (117) et un centre commun (125) du troisième arc de cercle (115) et du quatrième arc de cercle (117) ; **caractérisée en ce que** le premier arc de cercle (111) et un centre (121) du premier arc de cercle (111) sont situés sur des côtés différents du plan de section longitudinale (119) ;
le deuxième arc de cercle (113) et un centre (123) du deuxième arc de cercle (113) sont situés sur des côtés différents du plan de section longitudinale (119).

2. Surface de glissement intérieure (101) selon la revendication 1 ; **caractérisée en ce que** le centre (121) du premier arc de cercle (111) et le centre (123) du deuxième arc de cercle (113) sont symétriques par rapport au plan de section longitudinale (119).

3. Surface de glissement intérieure (101) selon l'une quelconque des revendications précédentes ; **caractérisée en ce qu'**un rayon du premier arc de cercle (111) est supérieur à un rayon du troisième arc de cercle (115) et à un rayon du quatrième arc de cercle (117).

4. Palier lisse radial ; **caractérisé par**
une surface de glissement intérieure (101) selon l'une quelconque des revendications précédentes et une surface de glissement extérieure cylindrique ;
la surface de glissement intérieure (101) et la surface de glissement extérieure formant une paire de surfaces de glissement.

5. Étage planétaire avec au moins un satellite et au moins un goujon porte-satellites ; **caractérisé par** au moins un palier lisse radial selon la revendication précédente ;
le satellite étant monté sur le goujon porte-satellites au moyen du palier lisse radial.

6. Étage planétaire selon la revendication précédente ; **caractérisé en ce que** le goujon porte-satellites réalise d'un seul tenant la surface de glissement intérieure (101) du palier lisse radial.

7. Procédé de fabrication d'un composant ayant une surface de glissement intérieure (101) selon l'une quelconque des revendications 1 à 3 ; avec les étapes suivantes :
- la rotation d'une pièce, la pièce tournant autour d'un axe passant par le centre (121) du premier arc de cercle (111) ;
- la rotation de la pièce, la pièce tournant autour d'un axe passant par le centre (123) du deuxième arc de cercle (113) ; et
- la rotation de la pièce, la pièce tournant autour d'un axe passant par le centre (125) du troisième arc de cercle (115) et du quatrième arc de cercle (117).
